# EUROPEAN PATENT SPECIFICATION

(11) **EP 4 299 835 B1**
(45) Date of publication and mention of the grant of the patent: **13.08.2025**
(21) Application number: 22759945.3
(22) Date of filing: 11.02.2022
(51) Int. Cl.: E02D 25/00

(54) **UNDERWATER CONCRETE BLOCK STRUCTURE AND CONSTRUCTION METHOD THEREFOR**
UNTERWASSER-BETONBLOCKSTRUKTUR UND KONSTRUKTIONSVERFAHREN DAFÜR
STRUCTURE DE BLOCS DE BÉTON SOUS-MARINE ET PROCÉDÉ DE CONSTRUCTION ASSOCIÉ

(30) Priority: 25.02.2021 KR 20210025363
(43) Date of publication of application: 03.01.2024
(73) Proprietor: Yujoo Co., Ltd., Gijang-gun, Busan 46073 (KR)
(72) Inventor: KIM, Sangki, Busan 47148 (KR)
(74) Representative: Hoefer & Partner Patentanwälte mbB
(86) International application number: PCT/KR2022/002076
(87) International publication number: WO 2022/182027

(56) References cited:
- CA-A1- 3 127 315
- JP-A- 2012 251 292
- KR-A- 20110 116 262
- KR-B1- 101 355 805
- KR-B1- 101 355 805
- KR-B1- 101 746 097
- KR-B1- 102 191 675
- KR-B1- 102 333 872

## Description

### Technical Field

The present invention relates to an underwater concrete block structure installed at sea or in a river for various purposes such as docks for a port, coastal wave absorbing revetment or breakwater, etc. and a method of constructing an underwater concrete block structure.

### Background Art

Generally, an underwater concrete block structure, such as docks for a port, coastal wave absorbing revetment or breakwater, etc., is installed underwater for various purposes. The underwater structure refers to a structure that is installed underwater so that the upper portion thereof is located above or below the water surface.

A widely known construction technique for the construction of underwater structures is a large caisson method. While the large caisson method has the advantage of being able to withstand big waves, the large caisson method also has the disadvantage of requiring high costs for transportation and construction and having various constraints, since the large caisson which is very huge structure needs to be fabricated on land, transported to the installation point, and installed in the water.

In order to solve the problem of the large caisson method, a method of forming an underwater structure by stacking small concrete blocks in multiple layers according to the water depth is known.

The inventor's Korean Patent No. 10-1355805 (registered on Jan. 15, 2014) entitled "Underwater Concrete Block Structure and Construction Method thereof" discloses a technique in which a concrete column is formed in a waterproof membrane and an upper concrete block and a lower concrete block are coupled together in a structural integrity by concrete columns, thereby having sufficient structural stability even in the waves caused by large typhoons.

The present disclosure is proposed to further improve the prior art.

### Disclosure

### Technical Problem

The present disclosure has been made to solve the above problem occurring in the prior art and is intended to propose an underwater concrete block structure in which there is no need to use a waterproof membrane, and a concrete column and a first concrete block can be firmly coupled via a column rebar assembly, and a construction method therefor.

### Technical Solution

In order to accomplish the above objectives, the present disclosure provides a method of constructing an underwater concrete block structure, the method includes: a first concrete block fabrication step of fabricating a first concrete block comprising a first concrete block body, a column rebar assembly which extends vertically upward from a lower end part thereof connected to the inside of the first concrete block body and protrudes upward from the upper surface of the first concrete block body, and a first watertight packing disposed on the upper surface of the first concrete block body in a form surrounding the column rebar assembly; a guide pole installation step of installing a guide pole on the first concrete block after the first concrete block fabrication step, wherein the guide pole comprises a guide pipe having a shape of a pipe extending vertically to insert the column rebar assembly along the inside of the guide pipe and a upper insertion guide part formed at the upper end of the guide pipe and having an upwardly tapered shape; a first concrete block installation step of installing the first concrete block underwater after the guide pole installation step; a second concrete block fabrication step of fabricating a second concrete block comprising a second concrete block body having a through hole extending vertically; a second concrete block installation step of installing the second concrete block such that a concrete block assembly is formed by installing the second concrete block on the first concrete block so that the guide pole is inserted into the through hole of the second concrete block after the second concrete block fabrication step and the first concrete block installation step, wherein a concrete-column through hole having a closed lower end is formed in the concrete block assembly by the through hole of the second concrete block and the first concrete block, and the first watertight packing is located between the first concrete block and the second concrete block to prevent water from being introduced into the concrete-column through hole from the outside; a drainage step of removing water contained inside the concrete-column through hole after the second concrete block installation step; a guide pole removal step of removing the guide pole after the drainage step; and a concrete column formation step of forming a concrete column by pouring concrete into the concrete-column through hole after the drainage step, wherein the concrete column comprises the column rebar assembly and the poured concrete integrated with each other and is coupled to the first concrete block body via the column rebar assembly.

In the above, the column rebar assembly may have a length to pass through the concrete-column through hole and protrudes from the top of the concrete-column through hole, and a cap concrete formation step of forming a cap concrete on the concrete block assembly after the concrete column formation step so that an upper end of the column rebar assembly is connected to the inside of the cap concrete may be comprised.

In the above, a block-side coupler may be provided in the first concrete block body in a form surrounding the column rebar assembly, the guide pole may comprise a pipe-side coupler at a lower end part of the guide pipe to be coupled detachably to the block-side coupler and a third watertight packing provided on the lower end part of the guide pipe to prevent water from being introduced into the inside of the guide pipe from the outside by being in close contact with the first concrete block when the pipe-side coupler of the guide pipe is coupled to the block-side coupler, and at the guide pole installation step, the block-side coupler of the guide pole may be coupled detachably to the block-side coupler of the first concrete block.

In the above, a drain pipe of which a lower end communicates with the outside through a drain hole formed in the lower end part of the guide pipe may extend vertically inside the guide pole, the water contained inside the concrete-column hole may be removed using the drain pipe at the drainage step, and the guide pole removal step may be performed after the drainage step.

In the above, a second watertight packing may be disposed on an upper surface of the second concrete block body in a form surrounding the through hole; and at the second concrete block installation step, a plurality of second concrete blocks may be installed in multiple layers on the first concrete block, and the second watertight packing may be located between the second concrete blocks installed to be vertically adjacent to each other so that water is prevented from being introduced into the concrete-column through hole from the outside.

In another aspect of the present disclosure, an underwater concrete block structure includes: a concrete block assembly comprising: a first concrete block having a first concrete block body, a column rebar assembly which extends vertically upward from a lower end part thereof connected to the inside of the first concrete block body and protrudes upward from the upper surface of the first concrete block body, and a block-side coupler provided in the first concrete block body in a form surrounding the column rebar assembly, a second concrete block having a second concrete block body with a through hole extending vertically and installed on the first concrete block so that the column rebar assembly of the first concrete block is inserted into the through hole of the second concrete block, a concrete-column through hole which has a closed lower end and is formed by the through hole of the second concrete block and the first concrete block, and a first watertight packing which is located between the first concrete block and the second concrete block and prevents water from being introduced into the concrete-column through hole from the outside; and a concrete column formed in such a manner that concrete poured into the concrete-column through hole is integrated with the column rebar assembly and coupled to the first concrete block body via the column rebar assembly.

In the above, the column rebar assembly may have a length to pass through the concrete-column through hole and protrude from the top of the concrete-column through hole, a cap concrete may be formed on the concrete block assembly, and an upper end of the column rebar assembly may be connected to the inside of the cap concrete.

In the above, the concrete block assembly may comprise a plurality of second concrete blocks which are installed in multiple layers on the first concrete block and the second watertight packing which is located between the second concrete blocks installed to be vertically adjacent to each other so that water is prevented from being introduced into the concrete-column through hole from the outside.

### Advantageous Effects

As described above, the present disclosure does not need a waterproof membrane, the concrete column can be formed in the same way as the land environment, and the concrete column and the first concrete block can be coupled more firmly via the column rebar assembly.

### Description of Drawings

FIGS. 1 to 9 are views sequentially illustrating a method of constructing an underwater concrete block structure according to a first embodiment of the present disclosure,
FIG. 10 is a perspective view of a first concrete block in FIG. 1,
FIG. 11 is a sectional view of a guide pole in FIG. 3,
FIG. 12 is a sectional view taken along the A-A line of FIG. 11,
FIG. 13 is a perspective view of a second concrete block in FIG. 5,
FIG. 14 is a sectional view showing the plurality of concrete block assemblies of FIG. 5 continuously disposed horizontally,
FIG. 15 is a sectional view of an underwater concrete block structure according to a second embodiment of the present disclosure,
FIG. 16 is a sectional view of an underwater concrete block structure according to a third embodiment of the present disclosure,
FIG. 17 is a sectional view of an underwater concrete block structure according to a fourth embodiment of the present disclosure,
FIG. 18 is a perspective view of a second concrete block in FIG. 17,
FIG. 19 is a sectional view of FIG. 18.

### Best Mode

Hereinafter, embodiments of the present disclosure will be described in detail with reference to the accompanying drawings so that those skilled in the art to which the present disclosure belongs can easily embody the present disclosure. However, the present disclosure may be embodied in various different forms and is not limited to the embodiments described herein. In addition, in the drawings, parts irrelevant to the description of the present disclosure are omitted in order to clearly describe the present disclosure, and similar reference numerals are assigned to similar parts throughout the specification.

Throughout the specification, when a part "includes" a certain component, it means that other components may be further included without being excluded unless specifically stated to the contrary.

First, a method of constructing an underwater concrete block structure according to a first embodiment of the present disclosure will be described.

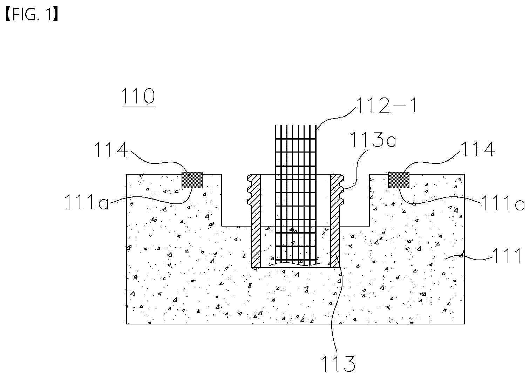

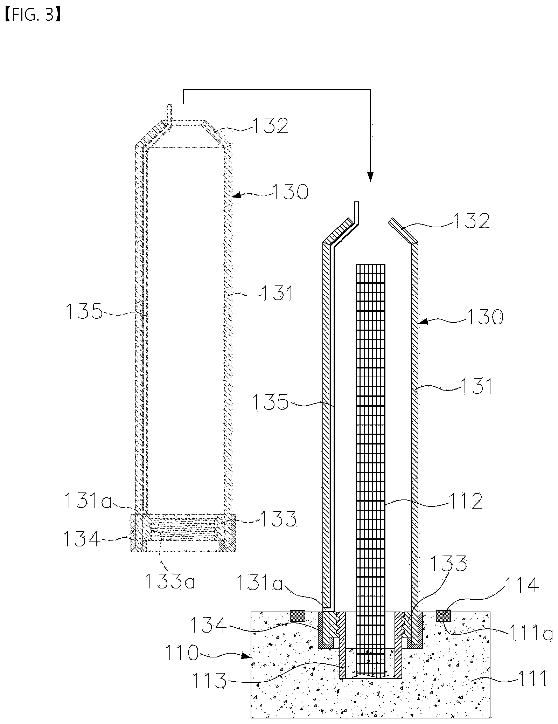

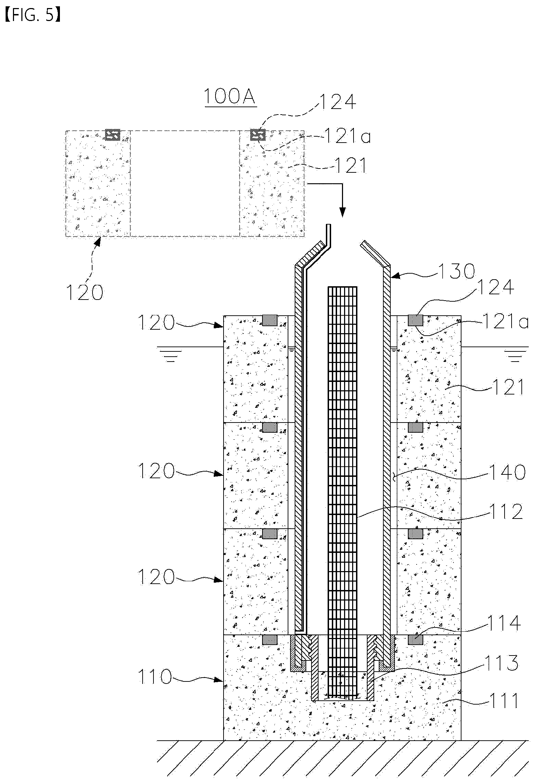

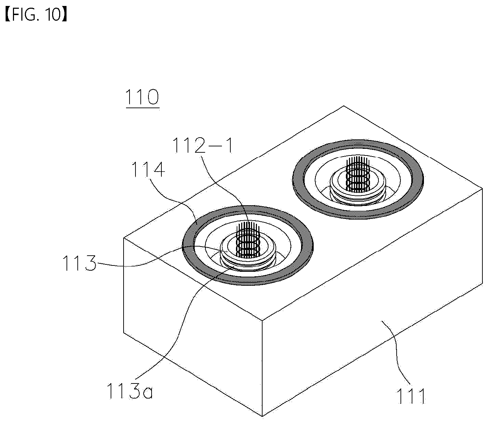

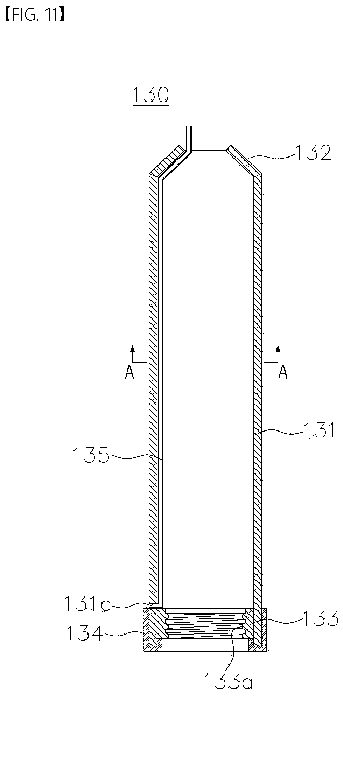

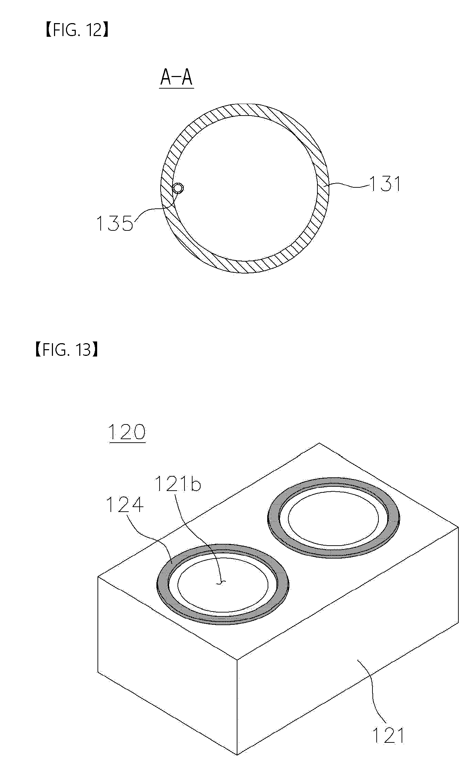

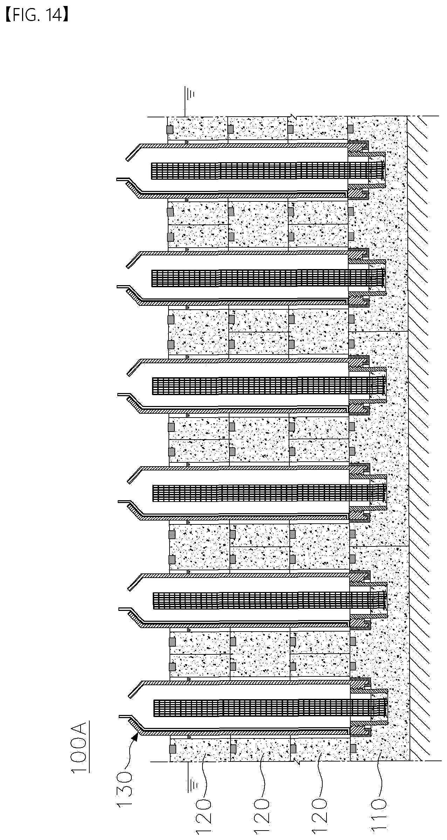

FIGS. 1 to 9 are views sequentially illustrating a method of constructing an underwater concrete block structure according to a first embodiment of the present disclosure, FIG. 10 is a perspective view of a first concrete block in FIG. 1, FIG. 11 is a sectional view of a guide pole in FIG. 3, FIG. 12 is a sectional view taken along the A-A line of FIG. 11, FIG. 13 is a perspective view of a second concrete block in FIG. 5, FIG. 14 is a sectional view showing the plurality of concrete block assemblies of FIG. 5 continuously disposed horizontally.

### (1) First concrete block fabrication step

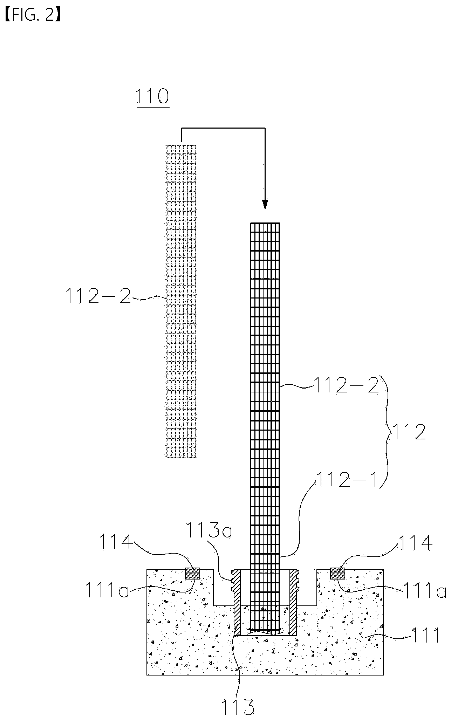

In this embodiment a first concrete block fabrication step is performed in the order of FIG. 1 and FIG. 2.

First, as illustrated in FIGS. 1 and 10, the first concrete block 110 is fabricated in first.

The first concrete block 110 includes a first concrete block body 111 having a cuboid shape, as illustrated in FIG. 10.

The first concrete block body 111 is provided with a preliminary rebar assembly 112-1, a block-side coupler 113, and a first watertight packing 114.

In this embodiment, two preliminary rebar assemblies 112-1 are provided, and a block-side coupler 113 and a first watertight packing 114 are provided for each of the preliminary rebar assemblies 113-1.

Each of the preliminary rebar assemblies 112-1 has a lower end part connected to the inside of the first concrete block body 111 (specifically, the inner reinforcing bar of the first concrete block body 111) and extends vertically upward from the lower end part to protrude upward from the upper surface of the first concrete block body 111.

As illustrated in FIG. 2, an extension rebar assembly 112-2 is connected to the preliminary rebar assembly 112-1, and thus the preliminary rebar assembly 112-1 and the extension rebar assembly 112-2 together constitute the column rebar assembly 112.

The block-side coupler 113 is provided in a form surrounding the preliminary rebar assembly 112-1.

In this embodiment, the block-side coupler 113 has a form of a pipe and the preliminary rebar assembly 112-1 is disposed therein and male threads 113a are formed on an outer circumferential surface thereof.

A first packing groove 111a is formed on the upper surface of the first concrete block body 111, and a first watertight packing 114 is provided in the first packing groove 111a.

The first packing groove 111a and the first watertight packing 114 are formed in the form of a ring surrounding the preliminary rebar assembly 112-1.

After fabricating the first concrete block 110 as illustrated in FIG. 1, the extension rebar assembly 112-2 is connected to the preliminary rebar assembly 112-1 as illustrated in FIG. 2, and the fabrication of the first concrete block 110 is completed.

Accordingly, the first concrete block 110 includes the first concrete block body 111, the column rebar assembly 112, the block-side coupler 113, and the first watertight packing 114.

### (2) Guide pole installation step

After the first concrete block fabrication step, as illustrated in FIG. 3, the guide pole 130 is detachably coupled to the block-side coupler 113 of the first concrete block 110.

As illustrated in FIGS. 11 and 12, the guide pole 130 includes a guide pipe 131, an upper insertion guide part 132, a pipe-side coupler 133, a third watertight packing 134, and a drain pipe 135.

The guide pipe 131, which has a shape of a pipe extending in a vertical direction, has a hollow extending in the vertical direction formed along the inside thereof and is open in the upper and lower parts thereof.

Accordingly, the column rebar assembly 112 may be inserted along the inside of the guide pipe 131.

The guide pipe 131 has a drain hole 131a formed at a lower end part thereof.

The upper insertion guide part 132 is formed at the upper end of the guide pipe 131 and has an upwardly tapered shape.

The upper insertion guide part 132 is intended to be a guide for installing a second concrete block 120 to be described later.

The pipe-side coupler 133 is provided on the inner circumferential surface of the lower end part of the guide pipe 131 and is detachably coupled to the block-side coupler 113 of the first concrete block 110.

To this end, female threads 133a are formed in the pipe-side coupler 133 so as to be screwed to the male threads 113a of the block-side coupler 113.

In this embodiment, although the pipe-side coupler 133 and the block-side coupler 113 are exemplified by screw coupling in order to be detachably coupled, the detachable coupling structure may be applied in a variety of ways.

The third watertight packing 134 is provided on the lower end part of the guide pipe 131, and when the guide pole 130 is coupled to the block-side coupler 113, that is, when the pipe-side coupler 133 is screwed to the block-side coupler 113, water is prevented from being introduced into the guide pipe 131 from the outside.

When the pipe-side coupler 133 of the guide pole 130 is screwed to the block-side coupler 113, the third watertight packing 134 is in close contact with the first concrete block 110, so water can be prevented from being introduced into the guide pipe 131.

The drain pipe 135 is a tube extending vertically inside the guide pole 130, and the lower end of the drain pipe 135 communicates with the outside through the drain hole 131a formed in the lower end part of the guide pipe 131, and the upper end of the drain pipe 135 extends up to the upper end part of the guide pole 130.

In this embodiment, the drain pipe 135 is in close contact with the inner circumferential surface of the guide pipe 131 and extends in the vertical direction.

The first concrete block 110 can be installed underwater after the guide pole 130 is coupled to the block-side coupler 113 on land as illustrated in FIG. 3.

In some cases, the guide pole 130 may be simply mounted on the top of the first concrete block 110, and in this case, the guide pole installation step may be performed after the first concrete block installation step.

### (3) First concrete block installation step

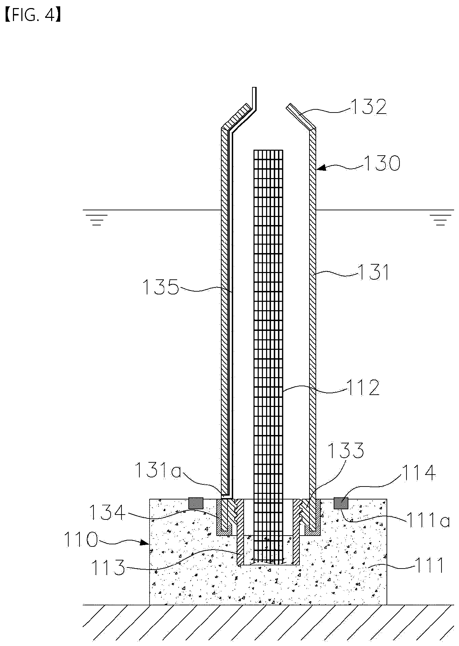

After the guide pole 130 is installed on the first concrete block 110 as illustrated in FIG. 3, the first concrete block 110 is installed underwater as illustrated in FIG. 4.

As illustrated in FIG. 4, the third watertight packing 134 is in close contact with the first concrete block 110 and prevents water from being introduced into the guide pole 130.

Furthermore, the upper end of the guide pole 130 protrudes from a water surface.

Accordingly, in this embodiment, the column rebar assembly 112 is not in contact with seawater by the guide pole 130. Accordingly, the column rebar assembly 112 has no risk of corrosion due to contact with seawater.

### (4) Second concrete block fabrication step

A second concrete block 120 is fabricated.

The second concrete block 120 includes a second concrete block body 121 which has a cuboid shape and two through holes 121b extending vertically as illustrated in FIG. 13.

The through hole 121b has a diameter larger than the diameter of the guide pipe 131.

A second watertight packing 124 is provided in each of the through holes 121b of the second concrete block body 121.

Second packing grooves 121a are formed on the upper surface of the second concrete block body 121, and the second watertight packing 124 is provided in each of the second packing grooves 121a.

The second packing groove 121a and the second watertight packing 124 are formed in the form of a ring surrounding the through hole 121b.

### (5) Second concrete block installation step

After the second concrete block fabrication step and the first concrete block installation step, as illustrated in FIG. 5, the second concrete blocks 120 are installed on the top of the first concrete block 110, and thus the concrete block assembly 100A is formed.

As illustrated in FIG. 4, the second concrete blocks 120 are installed so that the column rebar assemblies 112 of the first concrete block 110 installed underwater are inserted into the through holes 121b of the second concrete blocks 120.

More specifically, the second concrete block 120 is lowered from the upper side to the lower side so that the guide pole 130 installed in the first concrete block 110 is inserted into the through hole 121b of the second concrete block 120.

In this case, the upper insertion guide part 132 of the guide pole 130 is easily inserted into the through hole 121b of the second concrete block 120, and guides the seating position of the second concrete block 120.

This process is described in more detail in Korean Patent No. 10-2022339 "CONSTRUCTION METHOD FOR UNDERWATER CONCRETE BLOCK STRUCTURE" (registered on September 10, 2019) incorporated in the present specification.

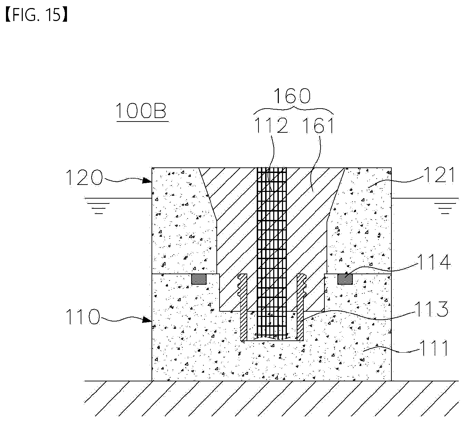

As illustrated in FIG. 5, a plurality of second concrete blocks 120 are installed in multiple layers on the top of the first concrete block 110, or in another embodiment(refer to FIG. 15), second concrete blocks 120 may be installed in one layer on the top of the first concrete block 110.

Accordingly, in the concrete block assembly 100A formed by the installation of the second concrete blocks 120, the concrete-column through hole 140 having a closed lower end is formed.

The concrete-column through hole 140 is formed by the through holes 121b of the second concrete blocks 120 and the first concrete block 110.

In the concrete block assembly 100A, the first watertight packing 114 is located between the first concrete block body 111 and the second concrete block body 121 and prevents water from being introduced into the concrete-column through hole 140 from the outside.

In the concrete block assembly 100A, the second watertight packing 114 is located between the second concrete block bodies 121 disposed vertically and prevents water from being introduced into the concrete-column through hole 140 from the outside.

That is, in the concrete block assembly 100A, although water exists in the concrete-column through hole 140, there is no water inside the guide pole 130, but there is water only in space outside the guide pole 130. Furthermore, external water cannot be introduced into the concrete-column through hole 140 due to the first watertight packing 114 and the second watertight packing 124.

As illustrated in FIG. 14, at the concrete block assembly 100A, a plurality of first concrete blocks 110 are continuously disposed horizontally, and a plurality of second concrete block 120 are continuously disposed horizontally.

### (6) Drainage step

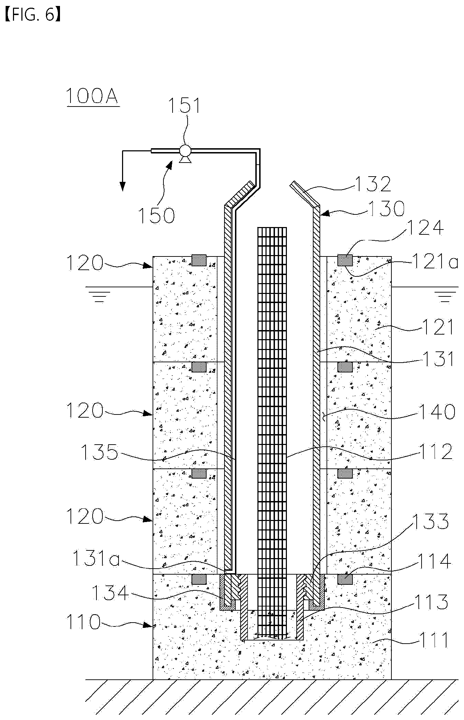

After the second concrete block installation step, as illustrated in FIG. 6, a drainage step is performed to remove water inside the concrete-column through hole 140.

To this end, a drainage device 150 including a drain pump 151 is connected to the upper end of the drain pipe 135, and due to the operation of the drain pump 151, water contained inside the concrete-column through hole 140 is discharged through the drain pipe 135 and the drainage device 150 to the outside.

Meanwhile, water cannot flow into the concrete-column through hole 140 from the outside due to the first watertight packing 114 and the second watertight packing 124, and thus due to this step, the concrete-column through hole 140 becomes dry.

In this embodiment, inside the concrete-column through hole 140, only water in space outside the guide pole 130 is drained, so draining time is greatly reduced.

Depending on an embodiment, there may be a case in which the guide pole 130 is not used. In this case, there is the inconvenience of inserting the drain hose up to the lower part of the concrete-column through hole 140, and further, since the inside of the concrete-column through hole 140 is full of water, it takes a relatively long time to drain the water.

### (7) Guide pole removal step

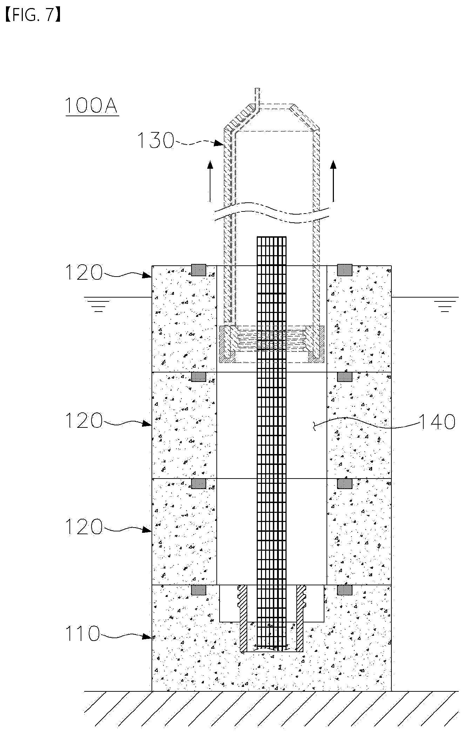

After the drainage step, as illustrated in FIG. 7, a guide pole removal step is preformed to remove the guide pole 130.

The guide pole 130 is rotated so that the screw coupling of the pipe-side coupler 133 to the block-side coupler 113 is released, and the guide pole 130 is moved upward to be removed.

### (8) Concrete column formation step

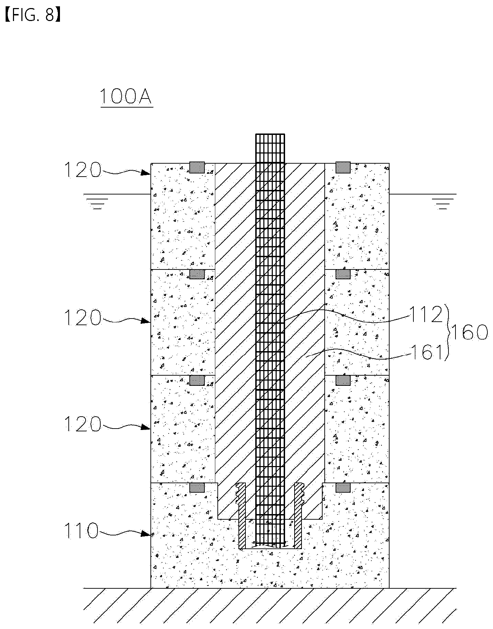

After the guide pole removal step, as illustrated in FIG. 8, concrete 161 is poured into the concrete-column through hole 140, and the concrete column 160 formed such that the column rebar assembly 112 and the poured concrete 161 are integrated with each other is formed in the concrete-column through hole 140.

In this case, there is no water in the concrete-column through hole 140, and there is no risk of leakage of the poured concrete to the outside due to the first watertight packing 114 and the second watertight packing 124, and thus a separate waterproof membrane is not required.

That is, the pouring of the concrete 161 can be performed in the same environment as on land.

Meanwhile, the upper end part of the column rebar assembly 112 does not form the concrete column 160 and protrudes from the top of the concrete column 160.

That is, the column rebar assembly 112 of the first concrete block 110 has a length to pass through the concrete-column through hole 140 and protrude from the top of the concrete-column through hole 140.

### (9) Cap concrete formation step

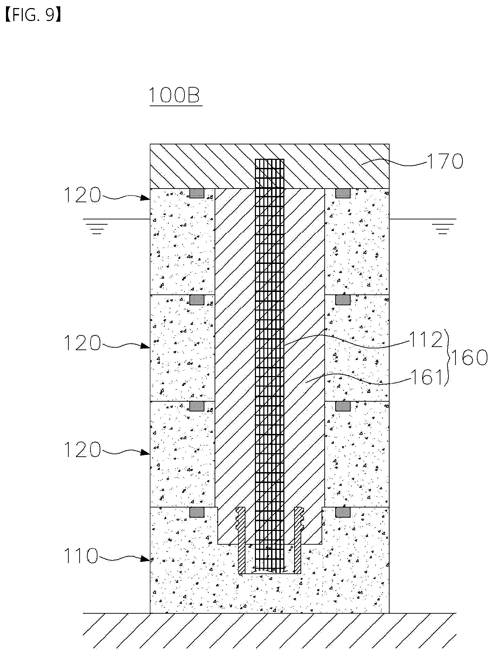

After the concrete column formation step, as illustrated in FIG. 9, a cap concrete 170 is formed on the top of the concrete block assembly 100A and thus the underwater concrete block structure 100B is completed.

In this case, the upper end part of the column rebar assembly 112 which protrudes upward from the upper surface of the concrete-column through hole 140 is connected to the inner reinforcing bar of the cap concrete 170.

In the underwater concrete block structure 100B manufactured as described above, the lower end part of the column rebar assembly 112 is connected to the first concrete block 110, and the upper end part of the column rebar assembly 112 is connected to the cap concrete 170, so the underwater concrete block structure 100B has a very firm structure.

That is, the concrete column 160, the first concrete block 110, and the cap concrete 170 may be integrally formed by the column rebar assembly 112.

Next, an underwater concrete block structure according to a second embodiment of the present disclosure will be described.

FIG. 15 is a sectional view of an underwater concrete block structure according to a second embodiment of the present disclosure.

This embodiment shows that the second concrete blocks 120 may be installed in one layer on the first concrete block 110, not in multiple layers.

In this embodiment, a cap concrete is not formed.

Due to the shape of the through hole 121b of the second concrete block 120, an upper end part of the concrete column 160 has a form of wide top and narrow bottom, and the upper end part of the concrete column 160 certainly prevents the second concrete block 120 from escaping upward.

Next, an underwater concrete block structure according to a third embodiment of the present disclosure will be described.

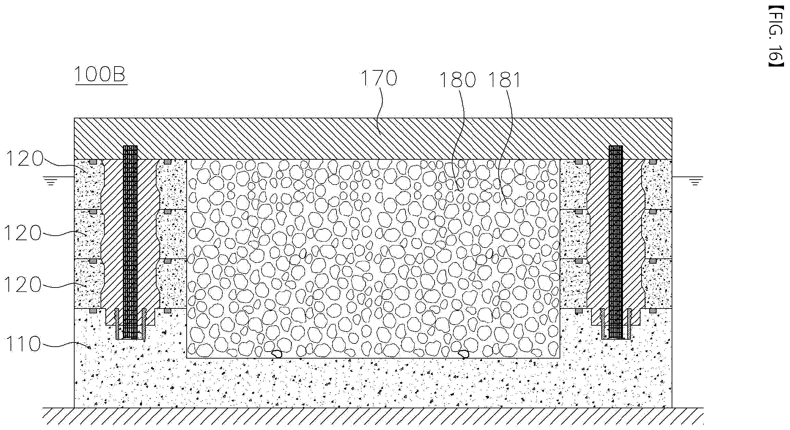

FIG. 16 is a sectional view of an underwater concrete block structure according to a third embodiment of the present disclosure.

In this embodiment, when the second concrete block 120 is installed on both sides of the first concrete block 110 to form a concrete block assembly, a space 180 for filling is formed inside the concrete block assembly.

After the second concrete block installation step, a filling step is performed to fill a filling material 181 (sand, gravel, or riprap, etc.) in the space 180 for filling.

After the filling step, the concrete column 160 is formed and the cap concrete 170 is formed.

Next, an underwater concrete block structure according to a fourth embodiment of the present disclosure will be described.

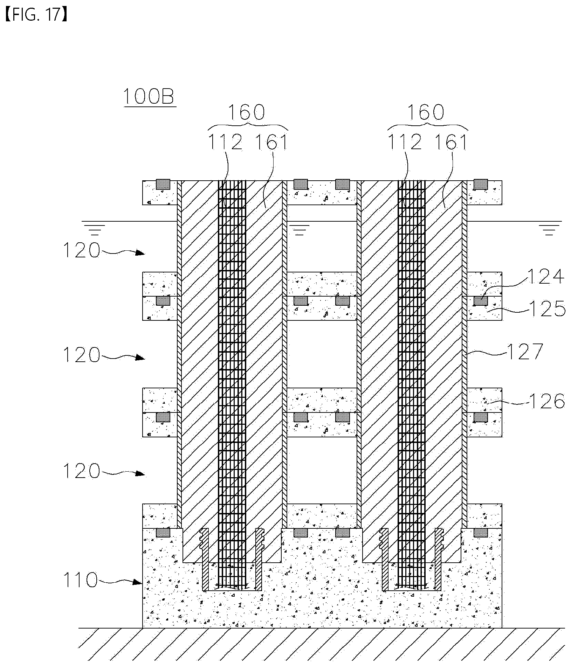

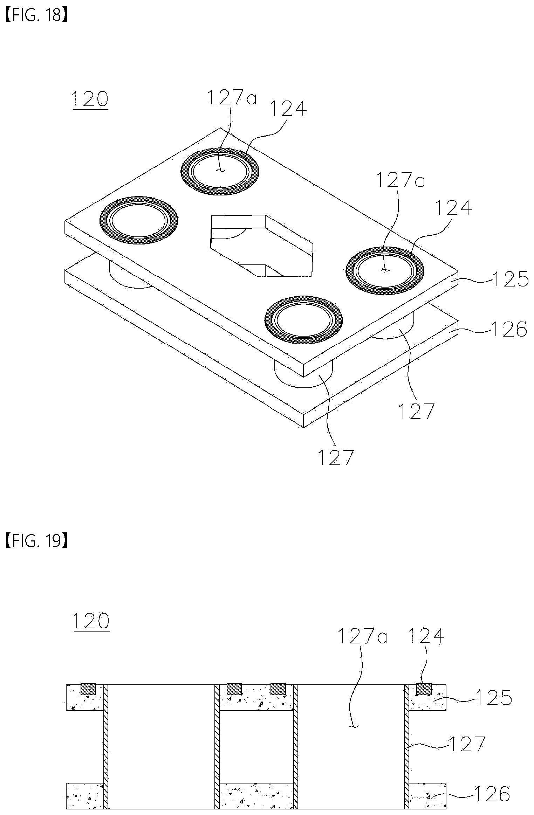

FIG. 17 is a sectional view of an underwater concrete block structure according to a fourth embodiment of the present disclosure, FIG. 18 is a perspective view of a second concrete block in FIG. 17, and FIG. 19 is a sectional view of FIG. 18.

As illustrated in FIGS. 18 and 19, a second concrete block body of the second concrete block 120 according to this embodiment includes an upper concrete plate 125, a lower concrete plate 126, and a vertical connection pipe 127.

The upper and lower concrete plates 125 and 126 are spaced apart from each other in the vertical direction so that seawater may flow therebetween.

A second watertight packing 124 is provided on the upper concrete plate 125.

An upper and lower parts of the vertical connection pipe 127 are respectively connected to the upper and lower concrete plates 125 and 126 so that a middle part of the vertical connection pipe is exposed to the outside between the upper and lower concrete plates 125 and 126.

In addition, the vertical connection pipe 127 is a hollow pipe having a through hole 127a therein.

The underwater concrete block structure 100B as shown in FIG. 17 is formed by using the second concrete blocks 120.

In FIG. 17, a concrete column 160 is continuously formed vertically along the vertical through holes 127a of the vertical connection pipes 127.

In such an underwater concrete block structure 100B of the present embodiment, an environment in which seawater can flow freely in the underwater concrete block structure is provided.

That is, the seawater can flow freely around the vertical connection pipes 127, and the concrete columns 160 are internally formed through the vertical connection pipes 127 so that the underwater concrete block structure 100B has a very tightly bound structure.

The above description of the present disclosure is only for illustrative purposes, and those skilled in the art will appreciate that various modifications are possible without departing from the scope of the present disclosure. Therefore, it should be understood that the embodiments described above are illustrative in all respects and not limiting. For example, each component described as a single type may be implemented in a distributed manner, and similarly, components described as being distributed may also be implemented in a combined form.

The scope of the present disclosure is indicated by the claim s to be described later rather than the detailed description.

### Industrial Applicability

The present disclosure may be used to construct an underwater concrete block structure installed at sea or in a river for various purposes such as docks for a port, coastal wave absorbing revetment or breakwater, etc.

## Claims

1. A method of constructing an underwater concrete block structure (100B), the method comprising:
a first concrete block fabrication step of fabricating a first concrete block (110) comprising a first concrete block body (111), a column rebar assembly (112) which extends vertically upward from a lower end part thereof connected to the inside of the first concrete block body and protrudes upward from the upper surface of the first concrete block body, and a first watertight packing (114) disposed on the upper surface of the first concrete block body in a form surrounding the column rebar assembly;
a guide pole installation step of installing a guide pole (130) on the first concrete block after the first concrete block fabrication step, wherein the guide pole comprises a guide pipe (131) having a shape of a pipe extending vertically tc insert the column rebar assembly along the inside of the guide pipe and a upper insertion guide part (132) formed at the upper end of the guide pipe and having an upwardly tapered shape;
a first concrete block installation step of installing the first concrete block underwater after the guide pole installation step;
a second concrete block fabrication step of fabricating a second concrete block (120) comprising a second concrete block body (121) having a through hole (121b) extending vertically;
a second concrete block installation step of installing the second concrete block such that a concrete block assembly (100A) is formed by installing the second concrete block on the first concrete block so that the guide pole is inserted into the through hole of the second concrete block after the second concrete block fabrication step and the first concrete block installation step, wherein a concrete-column through hole (140) having a closed lower end is formed in the concrete block assembly by the through hole of the second concrete block and the first concrete block, and the first watertight packing is located between the first concrete block and the second concrete block to prevent water from being introduced into the concrete-column through hole from the outside;
a drainage step of removing water contained inside the concrete-column through hole after the second concrete block installation step;
a guide pole removal step of removing the guide pole after the drainage step; and
a concrete column formation step of forming a concrete column (160) by pouring concrete (161) into the concrete-column through hole after the drainage step, wherein the concrete column comprises the column rebar assembly and the poured concrete integrated with each other and is coupled to the first concrete block body via the column rebar assembly.

2. The method of claim 1, wherein the column rebar assembly has a length to pass through the concrete-column through hole and protrudes from the top of the concrete-column through hole, and a cap concrete formation step of forming a cap concrete (170) on the concrete block assembly after the concrete column formation step so that an upper end of the column rebar assembly is connected to the inside of the cap concrete is comprised.

3. The method of claim 1, wherein a block-side coupler is provided in the first concrete block body in a form surrounding the column rebar assembly,
the guide pole comprises a pipe-side coupler (133) at a lower end part of the guide pipe to be coupled detachably to the block-side coupler and a third watertight packing (134) provided on the lower end part of the guide pipe to prevent water from being introduced into the inside of the guide pipe from the outside by being in close contact with the first concrete block when the pipe-side coupler of the guide pipe is coupled to the block-side coupler, and
at the guide pole installation step, the block-side coupler of the guide pole is coupled detachably to the block-side coupler of the first concrete block.

4. The method of claim 3, wherein a drain pipe (135) of which a lower end communicates with the outside through a drain hole formed in the lower end part of the guide pipe extends vertically inside the guide pole,
the water contained inside the concrete-column hole is removed using the drain pipe at the drainage step, and
the guide pole removal step is performed after the drainage step.

5. The method of claim 1, wherein a second watertight packing (124) is disposed on an upper surface of the second concrete block body in a form surrounding the through hole; and
at the second concrete block installation step, a plurality of second concrete blocks are installed in multiple layers on the first concrete block, and the second watertight packing is located between the second concrete blocks installed to be vertically adjacent to each other so that water is prevented from being introduced into the concrete-column through hole from the outside.

6. An underwater concrete block structure (100B) comprising:
a concrete block assembly (100A) comprising: a first concrete block (110) having a first concrete block (111), a column rebar assembly (112) which extends vertically upward from a lower end part thereof connected to the inside of the first concrete block body and protrudes upward from the upper surface of the first concrete block body, and a block-side coupler (113) provided in the first concrete block body in a form surrounding the column rebar assembly,
a second concrete block (120) having a second concrete block body (121) with a through hole (121b) extending vertically and installed on the first concrete block so that the column rebar assembly of the first concrete block is inserted into the through hole of the second concrete block,
a concrete-column through hole (140) which has a closed lower end and is formed by the through hole of the second concrete block and the first concrete block, and
a first watertight packing (114) which is located between the first concrete block and the second concrete block and prevents water from being introduced into the concrete-column through hole from the outside; and
a concrete column (160) formed in such a manner that concrete poured into the concrete-column through hole is integrated with the column rebar assembly and coupled to the first concrete block body via the column rebar assembly.

7. The underwater concrete block structure of claim 6, wherein the column rebar assembly has a length to pass through the concrete-column through hole and protrudes from the top of the concrete-column through hole, a cap concrete (170) is formed on the concrete block assembly, and an upper end of the column rebar assembly is connected to the inside of the cap concrete.

8. The underwater concrete block structure of claim 6, wherein the concrete block assembly comprises a plurality of second concrete blocks (120) which are installed in multiple layers on the first concrete block and the second watertight packing which is located between the second concrete blocks installed to be vertically adjacent to each other so that water is prevented from being introduced into the concrete-column through hole from the outside.

## Patentansprüche

1. Verfahren zum Errichten einer Unterwasser-Betonblock-Struktur (100B), wobei das Verfahren umfasst:
einen ersten Betonblock-Herstellungsschritt zum Herstellen eines ersten Betonblocks (110), der einen ersten Betonblockkörper (111), eine Säulenbewehrungsanordnung (112), die sich vertikal nach oben von einem unteren Endabschnitt davon erstreckt, der mit der Innenseite des ersten Betonblockkörpers verbunden wird, und nach oben von der Oberfläche des ersten Betonblockkörpers vorsteht, und eine erste wasserdichte Dichtung (114), die an der Oberfläche des ersten Betonblockkörpers in einer die Säulenbewehrungsanordnung umgebenden Form angeordnet wird, umfasst;
einen Führungsstangen-Installationsschritt zum Installieren einer Führungsstange (130) an den ersten Betonblock nach dem ersten Betonblock-Herstellungsschritt, wobei die Führungsstange ein Führungsrohr (131), das eine Form eines sich vertikal erstreckenden Rohrs hat, zum Einführen der Säulenbewehrungsanordnung entlang der Innenseite des Führungsrohrs und einen oberen Einführungsführungsabschnitt (132) umfasst, der an dem oberen Ende des Führungsrohrs gebildet wird und eine sich nach oben verjüngende Form hat;
einen ersten Betonblock-Installationsschritt zum Installieren des ersten Betonblocks unter Wasser nach dem Führungsstangen-Installationsschritt;
einen zweiten Betonblock-Herstellungsschritt zum Herstellen eines zweiten Betonblocks (120), der einen zweiten Betonblockkörper (121), der ein sich vertikal erstreckendes Durchgangsloch (121b) hat, umfasst;
einen zweiten Betonblock-Installationsschritt zum Installieren des zweiten Betonblocks, sodass eine Betonblockanordnung (100A) gebildet wird, indem der zweite Betonblock an den ersten Betonblock installiert wird, sodass die Führungsstange in das Durchgangsloch des zweiten Betonblocks eingeführt wird, nach dem zweiten Betonblock-Herstellungsschritt und dem ersten Betonblock-Installationsschritt, wobei ein Betonsäulen-Durchgangsloch (140), das ein geschlossenes unteres Ende hat, in der Betonblockanordnung durch das Betonsäulen-Durchgangsloch des zweiten Betonblocks und des ersten Betonblocks gebildet wird und die erste wasserdichte Dichtung zwischen dem ersten Betonblock und dem zweiten Betonblock angeordnet wird, um zu verhindern, dass Wasser von der Außenseite in das Betonsäulen-Durchgangsloch eindringt;
einen Entwässerungsschritt zum Entfernen von Wasser, das in dem Betonsäulen-Durchgangsloch enthalten wird, nach dem zweiten Betonblock-Installationsschritt;
einen Führungsstangen-Entfernungsschritt zum Entfernen der Führungsstange nach dem Entwässerungsschritt; und
einen Betonsäulen-Bildungsschritt zum Bilden einer Betonsäule (160) durch Gießen von Beton (161) in das Betonsäulen-Durchgangsloch nach dem Entwässerungsschritt, wobei die Betonsäule die Säulenbewehrungsanordnung und den gegossenen Beton umfasst, die miteinander integriert werden, und durch die Säulenbewehrungsanordnung mit dem ersten Betonblockkörper verbunden wird.

2. Verfahren nach Anspruch 1, wobei die Säulenbewehrungsanordnung eine Länge zum Passieren durch das Betonsäulen-Durchgangsloch hat und von der Oberseite des Betonsäulen-Durchgangslochs vorsteht, und ein Kappenbeton-Bildungsschritt zum Bilden eines Kappenbetons (170) an die Betonblockanordnung nach dem Betonsäulen-Bildungsschritt vorgesehen ist, sodass ein oberes Ende der Säulenbewehrungsanordnung mit der Innenseite des Kappenbetons verbunden wird.

3. Verfahren nach Anspruch 1, wobei ein blockseitiges Kupplungselement in dem ersten Betonblockkörper in einer die Säulenbewehrungsanordnung umgebenden Form vorgesehen wird,
die Führungsstange an einem unteren Endabschnitt des Führungsrohrs einen rohrseitigen Kupplungselement (133), der abnehmbar mit dem blockseitigen Kupplungselement gekoppelt wird, und eine dritte wasserdichte Dichtung (134) umfasst, die an dem unteren Endabschnitt des Führungsrohrs vorgesehen wird, um zu verhindern, dass Wasser von der Außenseite in die Innenseite des Führungsrohrs eindringt, indem sie in engem Kontakt mit dem ersten Betonblock steht, wenn das rohrseitige Kupplungselement des Führungsrohrs mit dem blockseitigen Kupplungselement gekoppelt wird, und
im Führungsstangen-Installationsschritt das blockseitige Kupplungselement der Führungsstange abnehmbar mit dem blockseitigen Kupplungselement des ersten Betonblocks gekoppelt wird.

4. Verfahren nach Anspruch 3, wobei sich ein Abflussrohr (135), dessen unteres Ende durch ein im unteren Endabschnitt des Führungsrohrs gebildetes Abflussloch mit der Außenseite in Verbindung steht, vertikal innerhalb der Führungsstange erstreckt,
das in dem Betonsäulen-Loch enthaltene Wasser im Entwässerungsschritt unter Verwendung des Abflussrohrs entfernt wird, und
der Führungsstangen-Entfernungsschritt nach dem Entwässerungsschritt durchgeführt wird.

5. Verfahren nach Anspruch 1, wobei eine zweite wasserdichte Dichtung (124) an eine Oberfläche des zweiten Betonblockkörpers in einer die Säulenbewehrungsanordnung umgebenden Form angeordnet wird; und
im zweiten Betonblock-Installationsschritt eine Mehrzahl von zweiten Betonblöcken in mehreren Schichten an dem ersten Betonblock installiert werden und die zweite wasserdichte Dichtung zwischen den zweiten Betonblöcken angeordnet wird, die installiert werden, vertikal nebeneinander zu liegen, sodass verhindert wird, dass Wasser von der Außenseite in das Betonsäulen-Durchgangsloch eindringt.

6. Unterwasser-Betonblock-Struktur (100B) umfassend:
eine Betonblockanordnung (100A) umfassend: einen ersten Betonblock (110), der einen ersten Betonblockkörper (111) umfasst, eine Säulenbewehrungsanordnung (112), die sich vertikal nach oben von einem unteren Endabschnitt davon erstreckt, der mit der Innenseite des ersten Betonblockkörpers verbunden ist, und nach oben von der Oberfläche des ersten Betonblockkörpers vorsteht, und ein blockseitiges Kupplungselement (113), das in dem ersten Betonblockkörper in einer die Säulenbewehrungsanordnung umgebenden Form vorgesehen ist,
einen zweiten Betonblock (120), der einen zweiten Betonblockkörper (121) mit einem sich vertikal erstreckenden Durchgangsloch (121b) umfasst und an dem ersten Betonblock installiert ist, sodass die Säulenbewehrungsanordnung des ersten Betonblocks in das Durchgangsloch des zweiten Betonblocks eingeführt ist,
ein Betonsäulen-Durchgangsloch (140), das ein geschlossenes unteres Ende umfasst und durch das Durchgangsloch des zweiten Betonblocks und des ersten Betonblocks gebildet ist, und
eine erste wasserdichte Dichtung (114), die zwischen dem ersten Betonblock und dem zweiten Betonblock angeordnet ist und verhindert, dass Wasser von der Außenseite in das Betonsäulen-Durchgangsloch eindringt; und
einen Betonsäulenblock (160), der dadurch gebildet ist, dass in das Betonsäulen-Durchgangsloch gegossener Beton mit der Säulenbewehrungsanordnung integriert wird und durch die Säulenbewehrungsanordnung mit dem ersten Betonblockkörper verbunden wird.

7. Unterwasser-Betonblock-Struktur nach Anspruch 6, wobei die Säulenbewehrungsanordnung eine Länge zum Passieren durch das Betonsäulen-Durchgangsloch hat und von der Oberseite des Betonsäulen-Durchgangsloch vorsteht, ein Kappenbeton (170) an der Betonblockanordnung gebildet ist und ein oberes Ende der Säulenbewehrungsanordnung mit der Innenseite des Kappenbetons verbunden ist.

8. Unterwasser-Betonblock-Struktur nach Anspruch 6, wobei die Betonblockanordnung eine Mehrzahl von zweiten Betonblöcken (120) umfasst, die in mehreren Schichten an dem ersten Betonblock und die zweite wasserdichte Dichtung installiert sind, die zwischen den zweiten Betonblöcken angeordnet sind, die vertikal benachbart zueinander installiert sind, sodass verhindert wird, dass Wasser von der Außenseite in das Durchgangsloch der Betonsäule eindringt.

## Revendications

1. Procédé de construction d'une structure sous-marine de blocs de béton (100B), le procédé comprenant :
une étape de fabrication de premier bloc de béton consistant à fabriquer un premier bloc de béton (110) comprenant un corps de premier bloc de béton (111), un ensemble barre d'armature de colonne (112) qui s'étend verticalement vers le haut depuis une partie d'extrémité inférieure de celui-ci reliée à l'intérieur du corps de premier bloc de béton et fait saillie vers le haut depuis la surface supérieure du corps de premier bloc de béton, et une première garniture étanche (114) disposée sur la surface supérieure du corps de premier bloc de béton dans une forme entourant l'ensemble barre d'armature de colonne ;
une étape d'installation de poteau de guidage consistant à installer un poteau de guidage (130) sur le premier bloc de béton après l'étape de fabrication de premier bloc de béton, où le poteau de guidage comprend un tuyau de guidage (131) ayant la forme d'un tuyau s'étendant verticalement pour insérer l'ensemble barre d'armature de colonne le long de l'intérieur du tuyau de guidage et une partie de guidage d'insertion supérieure (132) formée au niveau de l'extrémité supérieure du tuyau de guidage et ayant une forme effilée vers le haut ;
une étape d'installation de premier bloc de béton consistant à installer le premier bloc de béton sous l'eau après l'étape d'installation de poteau de guidage ;
une étape de fabrication de second bloc de béton consistant à fabriquer un second bloc de béton (120) comprenant un corps de second bloc de béton (121) ayant un trou traversant (121b) s'étendant verticalement ;
une étape d'installation de second bloc de béton consistant à installer le second bloc de béton de sorte qu'un ensemble de blocs de béton (100A) soit formé en installant le second bloc de béton sur le premier bloc de béton de sorte que le poteau de guidage soit inséré dans le trou traversant du second bloc de béton après l'étape de fabrication de second bloc de béton et l'étape d'installation de premier bloc de béton, où un trou traversant de colonne en béton (140) ayant une extrémité inférieure fermée est formé dans l'ensemble de blocs de béton par le trou traversant du second bloc de béton et le premier bloc de béton, et la première garniture étanche est située entre le premier bloc de béton et le second bloc de béton pour empêcher l'eau d'être introduite dans le trou traversant de colonne en béton depuis l'extérieur ;
une étape d'évacuation consistant à retirer l'eau contenue dans le trou traversant de colonne en béton après l'étape d'installation de second bloc de béton ;
une étape de retrait de poteau de guidage consistant à retirer le poteau de guidage après l'étape d'évacuation ; et
une étape de formation de colonne en béton consistant à former une colonne en béton (160) en coulant du béton (161) dans le trou traversant de colonne en béton après l'étape d'évacuation, où la colonne en béton comprend l'ensemble barre d'armature de colonne et le béton coulé intégrés l'un à l'autre et est couplée au corps de premier bloc de béton via l'ensemble barre d'armature de colonne.

2. Procédé selon la revendication 1, dans lequel l'ensemble barre d'armature de colonne a une longueur pour passer à travers le trou traversant de colonne en béton et fait saillie depuis le haut du trou traversant de colonne en béton, et une étape de formation de béton de couronnement consistant à former un béton de couronnement (170) sur l'ensemble de blocs de béton après l'étape de formation de colonne en béton de sorte qu'une extrémité supérieure de l'ensemble barre d'armature de colonne soit reliée à l'intérieur du béton de couronnement, est comprise.

3. Procédé selon la revendication 1, dans lequel un coupleur côté bloc est prévu dans le corps de premier bloc de béton dans une forme entourant l'ensemble barre d'armature de colonne,
le poteau de guidage comprend un coupleur côté tuyau (133) au niveau d'une partie d'extrémité inférieure du tuyau de guidage pour être couplé de manière amovible au coupleur côté bloc et une troisième garniture étanche (134) prévue sur la partie d'extrémité inférieure du tuyau de guidage pour empêcher l'eau d'être introduite à l'intérieur du tuyau de guidage depuis l'extérieur en étant en contact étroit avec le premier bloc de béton lorsque le coupleur côté tuyau du tuyau de guidage est couplé au coupleur côté bloc, et
à l'étape d'installation de poteau de guidage, le coupleur côté bloc du poteau de guidage est couplé de manière amovible au coupleur côté bloc du premier bloc de béton.

4. Procédé selon la revendication 3, dans lequel un tuyau d'évacuation (135) dont une extrémité inférieure communique avec l'extérieur à travers un trou d'évacuation formé dans la partie d'extrémité inférieure du tuyau de guidage s'étend verticalement à l'intérieur du poteau de guidage,
l'eau contenue dans le trou de colonne en béton est retirée en utilisant le tuyau d'évacuation à l'étape d'évacuation, et
l'étape de retrait de poteau de guidage est réalisée après l'étape d'évacuation.

5. Procédé selon la revendication 1, dans lequel une deuxième garniture étanche (124) est disposée sur une surface supérieure du corps de second bloc de béton dans une forme entourant le trou traversant ; et
à l'étape d'installation de second bloc de béton, une pluralité de seconds blocs de béton sont installés en de multiples couches sur le premier bloc de béton, et la deuxième garniture étanche est située entre les seconds blocs de béton installés de manière à être verticalement adjacents les uns aux autres de sorte que l'eau soit empêchée d'être introduite dans le trou traversant de colonne en béton depuis l'extérieur.

6. Structure sous-marine de blocs de béton (100B) comprenant :
un ensemble de blocs de béton (100A) comprenant : un premier bloc de béton (110) ayant un corps de premier bloc de béton (111),
un ensemble barre d'armature de colonne (112) qui s'étend verticalement vers le haut depuis une partie d'extrémité inférieure de celui-ci reliée à l'intérieur du corps de premier bloc de béton et fait saillie vers le haut depuis la surface supérieure du corps de premier bloc de béton, et un coupleur côté bloc (113) prévu dans le corps de premier bloc de béton dans une forme entourant l'ensemble barre d'armature de colonne,
un second bloc de béton (120) ayant un corps de second bloc de béton (121) avec un trou traversant (121b) s'étendant verticalement et installé sur le premier bloc de béton de sorte que l'ensemble barre d'armature de colonne du premier bloc de béton soit inséré dans le trou traversant du second bloc de béton,
un trou traversant de colonne en béton (140) qui a une extrémité inférieure fermée et est formé par le trou traversant du second bloc de béton et le premier bloc de béton, et
une première garniture étanche (114) qui est située entre le premier bloc de béton et le second bloc de béton et empêche l'eau d'être introduite dans le trou traversant de colonne en béton depuis l'extérieur ; et
une colonne en béton (160) formée de manière à ce que le béton coulé dans le trou traversant de colonne en béton soit intégré à l'ensemble barre d'armature de colonne et couplée au corps de premier bloc de béton via l'ensemble barre d'armature de colonne.

7. Structure sous-marine de blocs de béton selon la revendication 6, dans laquelle l'ensemble barre d'armature de colonne a une longueur pour passer à travers le trou traversant de colonne en béton et fait saillie depuis le haut du trou traversant de colonne en béton, un béton de couronnement (170) est formé sur l'ensemble de blocs de béton, et une extrémité supérieure de l'ensemble barre d'armature de colonne est reliée à l'intérieur du béton de couronnement.

8. Structure sous-marine de blocs de béton selon la revendication 6, dans laquelle l'ensemble de blocs de béton comprend une pluralité de seconds blocs de béton (120) qui sont installés en de multiples couches sur le premier bloc de béton et la deuxième garniture étanche qui est située entre les seconds blocs de béton installés de manière à être verticalement adjacents les uns aux autres de sorte que l'eau soit empêchée d'être introduite dans le trou traversant de colonne en béton depuis l'extérieur.
